(19) Europäisches Patentamt / European Patent Office / Office européen des brevets

(11) **EP 4 202 380 A1**

(12) **EUROPEAN PATENT APPLICATION**

(43) Date of publication:
**28.06.2023 Bulletin 2023/26**

(51) International Patent Classification (IPC):
**G01F 1/688** (2006.01)    **G01F 1/696** (2006.01)

(21) Application number: **21217527.7**

(52) Cooperative Patent Classification (CPC):
**G01F 1/6884; G01F 1/696;** G01F 1/6965

(22) Date of filing: **23.12.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Solexperts GmbH**
**87439 Kempten (DE)**

(72) Inventors:
• **RENNER, Tom**
**8610 Uster (CH)**
• **KRIEGSEIS, Jochen**
**71134 Aidlingen (DE)**

(74) Representative: **Clerc, Natalia**
**Isler & Pedrazzini AG**
**Giesshübelstrasse 45**
**Postfach 1772**
**8027 Zürich (CH)**

(54) **FLOW METER**

(57)    A method for measuring a fluid flow using a heated sensing device arranged in the fluid flow comprises the steps of measuring a temperature of the fluid, heating the sensing device with a first sensor element of the sensing device, measuring a temperature of the sensing device with a second sensor element being different from the first sensor element, and calculating a fluid velocity using the difference between the measured temperature of the sensing device and the measured temperature of the fluid. This measuring method enables measuring flow velocity and volume flow in boreholes, pipelines or other demanding places.

FIG. 7

**EP 4 202 380 A1**

**Description**

TECHNICAL FIELD

The present invention relates to a method and a flow meter for measuring fluid flow, especially in boreholes, pipes or tubes. The invention especially relates to measuring fluid velocity.

PRIOR ART

Fluid flow velocity can be measured in different ways, such as with mechanical impeller methods, hot wire anemometry, laser Doppler anemometry, particle image velocimetry and magnetic resonance velocimetry.

Thermal flow meters based on the concept of hot wire anemometers are well known in the state of the art. Hot wire anemometers comprise an electrically heated thin wire, which is cooled by a fluid flowing past the wire. As the electrical resistance of most metals is dependent upon the temperature of the metal, a relationship can be obtained between the resistance of the wire and the speed of the air. Thermal flow meters usually use two temperature sensors: an active sensor and a passive sensor. The passive sensor measures the temperature of the fluid medium. In one measuring method, the active sensor is heated in such a way, that a fixed temperature difference arises between the two temperature sensors. In other measuring methods, the voltage or the current applied to the heating unit is kept constant.

The convective heat transfer behavior of cylinders, which are transversely arranged in a fluid flow, has been investigated theoretically and experimentally. It was found that the convective heat transfer behavior can be described by the Nusselt number Nu and that it depends on the Reynolds number Re.

US 8 423 304 B2 discloses a thermal flow meter comprising two heatable resistance thermometers arranged in a measuring tube. The two thermometers lie in a plane, which is essentially perpendicular to the measuring tube axis. The plane is arranged in an angle between 30° and 60° to a longitudinal axis of the measuring tube.

DE 10 2014 119 231 A1 describes a thermal flow meter comprising three heatable temperature sensors, wherein at least two of the sensors are heated at the same time. The mass flow and the flow velocity are determined continuously.

In addition, Distributed Temperature Sensing (DTS) is well known. DTS uses fiber optic sensor cables that function as linear temperature sensors. They provide a continuous temperature profile along the entire length of the sensor cable. DTS usually utilizes the Raman Effect to measure temperature. Optical laser pulses sent through the fiber result in scattered light reflecting back to the transmitter. The intensity of the scattered light relates to the temperature along the fibre. The position of the measuring points along the fibre is determined by the arrival time of the scattered light back to the transmitter. The spatial distribution of sample points, i.e. the distance of the "measuring points", usually is about 0.5 meter and the measurement of the temperature has a quite high resolution and accuracy. DTS cables can be several kilometers long.

Another common fibre optic temperature measurement method is to engrave Fiber Bragg Gratings (FBG) into an optical fiber which scatter light with a specific wavelength. The intensity of the scattered light directly correlates with the temperature of a FBG. Because one grating scatters a unique and narrow wavelength bandwidth, a temperature measurement is associated to a single FBG of the fibre, essentially making it a point measurement.

Measuring fluid flow in a borehole, in pipelines, groundwater or other kind of underground cavities is a particular challenge, since the measurements locations are not easy to access, the fluid is often dirty and/or reactive, the degree of the basic temperature or the temperature changes are exceptional and other conditions are special.

In addition, the volume flow in boreholes, which lead into geothermal heat reservoirs, is an important information when heat reservoirs located in the earth's crust are investigated. Such heat reservoirs are used to generate electrical energy or heating power from the natural heat of the earth. Volume flow quantification however is quite difficult at such locations, for the reasons mentioned above.

SUMMARY OF THE INVENTION

It is therefore an object of the invention to provide a method for measuring fluid flow and a flow meter, which enable measuring fluid flow, especially in boreholes and pipelines, and even more especially for measuring fluid velocity.

This object is achieved with a method and a sensing device according to claims 1 and 9 respectively.

The inventive method for measuring a fluid flow using a heated sensing device arranged in the fluid flow comprises the steps of

measuring a temperature of the fluid,
heating the sensing device with a first sensor element of the sensing device,
measuring a temperature of the sensing device with a second sensor element being different from the first sensor element, and calculating a fluid velocity using the difference between the measured temperature of the sensing device and the measured temperature of the fluid.

By measuring the temperature directly at the location of the fluid flow, the sensing device can be used in demanding locations, such as boreholes or underground water cavities.

The inventive method can especially be used for measuring axial and radial flows in pipelines, boreholes or other cylindrical cavities. Not only flow velocity can be calculated but also volume flow and the direction of flow.

The inventive method enables to measure fluid flow, especially fluid velocity, in spatially extensive areas.

In a preferred variant of the inventive method, the first sensor element is heated by supplying an electrical power and calculating the fluid velocity using the equation

$$u = \sqrt[n]{\dfrac{\dfrac{P_{el}}{\lambda_F \pi \Delta l}\dfrac{1}{(T_S - T_F)}\left(\dfrac{T_F}{T_S - T_F}\right)^s - A}{B}}$$

with fluid velocity $u$, sensing device temperature $T_S$, fluid temperature $T_F$, supplied electrical power $P_{el}$ at a section $\Delta l$ of the sensing device, the section $\Delta l$ having the temperature $T_S$ and with the calibrated values: parameters A and $B$, the constants $n$ and $s$ and fluid's thermal conductivity $\lambda_F$.

This equation can be simplified by keeping the supplied electrical power constant, as can be seen in the simplified equation below:

$$u = \sqrt[n]{k_1 \dfrac{1}{(T_S - T_F)}\left(\dfrac{T_F}{T_S - T_F}\right)^s - k_2}$$

with fluid velocity $u$, constant $n$, constant $s$, sensing device temperature $T_S$, fluid temperature $T_F$ and two calibration constants $k_1$ and $k_2$.

Preferably, the temperature of the fluid is measured in the neighbourhood of the second sensor element, which measures the temperature of the sensing device. In a variant of the method, the fluid temperature is measured before the sensing device is heated. In another variant, the temperature of the fluid is measured while or after the sensing device is heated.

The fluid temperature can be measured with a separate temperature sensing element or with the second sensor element.

Preferably, the second sensor element is used having a multiple of measuring sections. The measuring sections can have a longitudinal expansion or the can be measuring points. A preferred variant of the inventive method therefore comprises the steps of measuring the sensing device temperatures in at least some of the multiple of measuring sections, calculating fluid velocity for each of the measured temperatures of the sensing device temperatures and combining the calculated fluid velocities to a fluid velocity field. This is especially useful in extended boreholes or pipelines, because extensive areas can be measured at the same time. In addition or alternatively, the accuracy of the measurements are improved.

Preferably, a second sensor element is used which is based on temperature sensing fibre optics. Preferably, a DTS optical fibre cable or a Fiber Bragg Grating cable is used.

The inventive sensing device is a cable with a sleeve, a heatable first sensor element and a temperature sensitive second sensor element. The heatable first sensor element and a temperature sensitive second sensor element are arranged within the sleeve. The cable or the sleeve are preferably flexible. The sleeve is preferably made of plastic. In other embodiments, the cable or the sleeve are stiff or semi-stiff. In some embodiments, the sleeve of the cable is a thin steel pipe or it is made of stiff or semi-stiff plastic.

Preferably, at least the second sensor element extends along the whole length of the sleeve. Preferably, the first sensor element extends at least parallel to the second sensor element along a sensitive area of the sensing device. This sensitive area is preferably arranged at an end of the sensing device.

The inventive sensing device is preferably with the inventive method. However, it can also be used with other measuring methods, especially with other calculation equations.

In a preferred embodiment, at least a part of the length of the sensing device is wound to a helix, preferably a cylindrical helix with a round cross section. This helix forms a sensitive area of the sensing device. Preferably, the first and the second sensor element are located at least in this part of the sensing device.

In case the second sensor element is formed by an array or chain of discrete temperature sensors, such as PT-1000 sensors, the second sensor element is preferably only arranged within this sensing area. Wires through the remaining sleeve or cable of the sensing device can make the connection to the soil surface.

In addition or alternatively, the first sensor element is located in this sensing area only and they can be formed by heating wires. These wires can be connected with electrical wires, which extend together with the PT-1000 sensor wires through the remaining sleeve or cable.

This remaining sleeve or cable can extend over several meters or even several kilometres.

In a preferred embodiment however, the second sensor element is based on temperature sensing fibre optics. In a most preferred embodiment, it is a DTS optical fibre cable or a Fiber Bragg Grating cable. These cables can extend over several meters or even kilometres.

Preferably, the first sensor element is at least one heating wire, especially when the second sensor element is based on sensing fibre optics. This enables a very small but long cable-shaped sensing device, which can even be wound on spools.

In preferred embodiments, the second sensor element is arranged centrally in the sleeve and it extends along the central axis of the sleeve. Preferably, the first sensor element is arranged around the second sensor element. In preferred embodiments, a thermal conductor material fills a remaining space in the sleeve to ensure optimised heat transfer.

The inventive sensing device is preferably used as a borehole probe. In some embodiments, the borehole probe comprises dampers, wherein the sensing device is arranged between the two dampers. This enables measurement in aquifers.

Further variants of the inventive method and further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Figure 1       shows a schematic presentation of a section of an inventive sensing device;

Figure 2       shows a cross-section of the inventive sensing device in a schematic presentation;

Figure 3       shows a perspective view of the inventive sensing device according to figure 2 in a schematic presentation

Figure 4       shows an inventive sensing unit including the sensing device of figure 3 in a schematic presentation;

Figure 5       shows a pump system for a borehole with a filter injecting fluid into a borehole;

Figure 6       shows the pump system of figure 5 extracting fluid from the borehole;

Figure 7       shows a flowchart of an inventive method according to a first variant;

Figure 8       shows a flowchart of an inventive method according to a second variant;

Figure 9       shows a measurement system including the sensing unit in a schematic presentation, lowered into a borehole having an aquifer with axial flow;

Figure 10      shows a measurement system including the sensing unit in a schematic presentation, arranged in a measurement place within a borehole with an aquifer with radial flow passing the sensing device, and

Figure 11      shows a measurement system including the sensing unit with a pump in a schematic presentation, arranged in a measurement place within a borehole with an aquifer with radial flow flowing away from the centre of the sensing device.

DESCRIPTION OF PREFERRED EMBODIMENTS

Description of the measurement method

The inventive measurement method enables determination of fluid velocities and volume flows in conduits like tubes, pipes and boreholes using a sensing unit comprising a sensing device 1, which includes temperature sensors enabling at least one measurement point, preferably a multiple of measurement points and heating elements for heating the temperature sensors.

Preferably, the sensing device 1 comprises sensing fibre optics as temperature sensors.

Preferably, the sensing fibres optics used are based on the DTS technology (i.e. Distributed Temperature Sensing Technology). Typical DTS optical fibre cables and measurement devices are developed and manufactured by companies like AP Sensing, Polytec and Neubrex Technologies.

In other embodiments, the sensing fibre optics are based on FBG technology, i.e. Fiber Bragg Grating measurement techniques. Typical fibres and measurement devices are developed and manufactured by companies like Polytec and Luna Innovations.

In alternative embodiments, the temperature sensors of the sensing device 1 consist of an array of temperatures sensors, preferably digital temperature sensors, arranged in line at a distance to each other. The temperature sensors are for example PT-1000 measuring chains or other kind of temperature sensor chains with temperature sensors arranged at a distance to each other. Typical sensor chains or sensor arrays are manufactured at Glötzl (and Solexperts) with sensors from manufacturers such as NXP Semiconductors

The inventive idea, especially the measurement method, the sensing device and the sensing unit explained below, can be realized with all of the above mentioned temperature sensors. In the following, the inventive idea will be explained based on using sensing fibre optic, especially on DTS fibre optic.

The sensing device 1 comprises at least one temperature sensing fibre 11 and at least one heating element. The at least one temperature sensing fibre 11 is preferably a DTS optical fibre cable as mentioned above. The heating element is preferably an electrical conductor 12, such as a heating wire. The at least temperature sensing fibre 11 is arranged together with the at least one electrical conductor 12 within a sleeve 10. The sleeve 10 can be flexible. In other embodiments, it is stiff or semi-stiff. Preferably, it is made of plastic or metal, such as steel.

The sensing device is placed in a fluid in such a way, that at least some sections 110, preferably approximately all sections 110, of the sensing device 1 extend approximately perpendicular to the direction of a fluid flow F.

A section 110 is defined by one single measurement point within the section 110. In the case of sensors arranged in a distance to each other, such as a PT-1000 measuring chain, a section comprises exactly one temperature sensor. In the case of a fibre optic temperature sensor, such as a DTS optical fibre cable, the section is defined by the spatial distribution of sampling points.

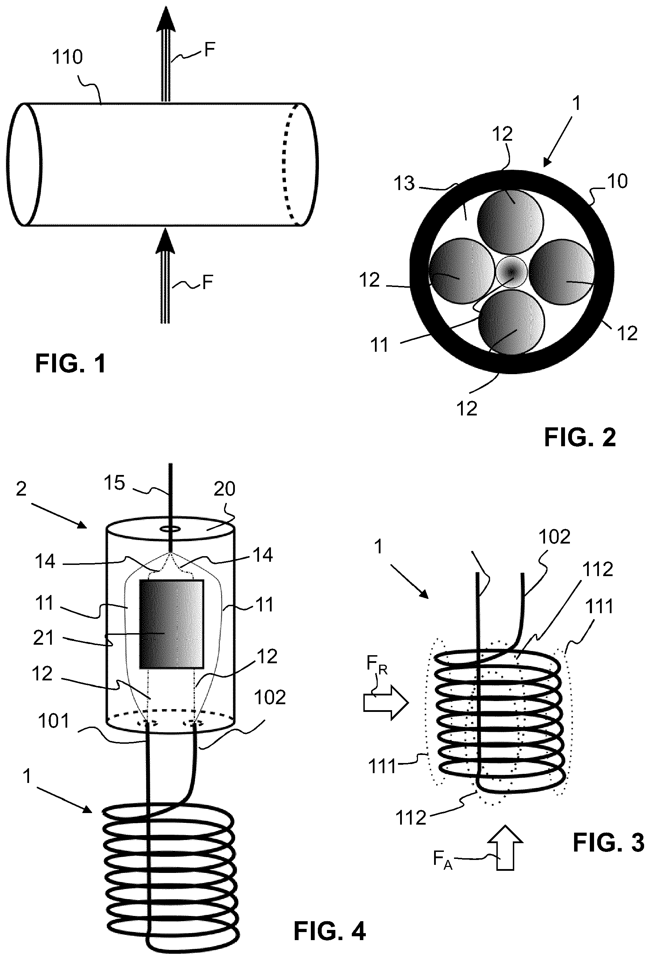

A preferred embodiment of the sensing device 1 is shown in figures 1 to 3. Figure 1 shows a section 110 of the sensing device 1 being arranged across a fluid flow F.

The above mentioned sections 110 or approximately all sections 110 of the sensing device 1 are therefore cylinders with a circular cross section in cross flow, whose heat transfer behaviour to a flowing fluid is mathematically known and described with the dimensionless Nusselt number Nu

$$\mathrm{Nu} = [\mathrm{A} + \mathrm{Bu^n}]\left(\frac{\mathrm{T_S} - \mathrm{T_F}}{\mathrm{T_F}}\right)^{\mathrm{s}}$$

with

A and B depending on further characteristic numbers, as will be explained below,
fluid velocity $u$,
constant $n$, as will be explained below
constant $s$, as will be explained below
sensing device temperature $T_S$ and
surrounding fluid temperature $T_F$.

Inserting the heat transfer equation into the heat equilibrium equation of the sensing device allows to formulate a measurement equation for the fluid velocity $u$

$$u = \sqrt[n]{\dfrac{\dfrac{P_{el}}{\lambda_F \pi \Delta l} \dfrac{1}{(T_S - T_F)}\left(\dfrac{T_F}{T_S - T_F}\right)^s - A}{B}}$$

with the supplied electrical power $P_{el}$ per section $\Delta l$ of the sensing device having the length $l$, wherein the section $\Delta l$ has the temperature $T_S$ and with the fluid's thermal conductivity $\lambda_F$.

Parameters A and B, the constants $n$ and $s$ as well as the fluid's thermal conductivity $\lambda_F$ have to be calibrated.

Fluid temperature $T_F$ can be measured by external temperature sensors or they can be measured with the unheated sensing device.

In its simplest form, the measurement equation can be further simplified to

$$u = \sqrt[n]{k_1 \dfrac{1}{(T_S - T_F)}\left(\dfrac{T_F}{T_S - T_F}\right)^s - k_2}$$

by setting a constant power $P_{el}$ to introduce two calibration constants $k_1$ and $k_2$. Calibration of the sensing device has to be done for every geometrical shape of the sensing device.

This means that a sensing device in the shape of a cylindrical helix has other calibration constants than a sensing device in another shape, such as a sphere or a plane device. In addition, calibration has to consider the cross-section shape of sleeve and the overall shape of the sensing device.

Calibration can be performed in different ways. In one variant of the inventive method, calibration is made by arranging the sensing device or the sensing unit to be calibrated in water channels and/or air channels and/or gas channels and/or fluid channels, wherein the velocity of the water/air/gas/fluid in these channels are well-known. The temperatures measured by the sensing device and sensing unit respectively can then be calibrated with the known velocities.

The measurement equation mentioned above describes the velocity of a fluid $u$ as a function of the sensing device temperature $T_S$ and the surrounding fluid temperature $T_F$ and produces a measured flow velocity for every temperature measurement point of the sensing device. This means, that each section comprising a measurement point provides a value for the flow velocity at this point. This applies to the general measurement equation as well as to the calibrated measurement equation and the simplified measurement equation.

The multiple of sections 110 and therefore the multiple of measuring points provides multiple fluid velocity values, which can be combined to a fluid velocity field. The fluid velocity field depends on the geometrical shape of the sensing device and the distribution of temperature measurement points along the sensing device. In addition or alternatively, the measured values of a field can be used to calculate an average speed and thus to obtain more meaningful measured values for particularly turbulent flows, such as in a borehole. The fluid velocity field can also be used to check the flow field along a pipeline for anomalies that indicate leaks.

The volume flow is preferably calculated by measuring the mean flow velocity in a conduit and multiplying it with the known surface of the conduit's cross section.

Description of the inventive sensing device

Figures 2 and 3 show a preferred embodiment of the inventive sensing device 1.

The sensing device 1 comprises the sleeve 10, which has a circular cross section. The sleeve 10 forms a housing or casing for the sensor elements arranged within the sleeve 10. The sleeve 10 is preferably made of a stiff material such as plastic or steel. It can also be flexible or semi-stiff.

The at least one the temperature sensing optical fibre 11 extends along the sleeve 10 within this sleeve 10. Preferably, it is arranged centrally in the sleeve 10.

At least one, preferable more than one, electrical conductor 12, such as heating wires, are arranged within the sleeve 10 as well. In this embodiment, four electrical conductors 12 surround the optical fibre 11. The electrical conductors 12 are heated. In order to ensure an evenly distributed heat, the optical fibre 11 and the at least one electrical conductor 12 are preferably embedded in a thermal conductor 13. The material of the thermal conductor 13 preferably fills the spacing within the sleeve 10 completely.

In use, the electrical conductors 12 are supplied with electrical power and heated as a result. The heat of the electrical conductors 12 spreads to the optical fibre 11 and to the surrounding wall of the sleeve 10. Temperatures in the cross-section of the sensing device 1 can be approximated as homogeneous, so that the fibre optic temperature measurements can be treated as temperature $T_S$.

Preferably, the cross-section of the sensing device 1 remains the same along the whole length of the sensing device 1 as shown in figure 2.

In preferred embodiments, the sensing device 1 is wound at least at one end to a cylindrical spiral or helix as shown in figure 3, which forms the sensing part. Other shapes, such as straight sensing devices, opposing helices, spheres, are possible as well. The shape depends on the shape of the velocity field that is to be measured. Sensitive sections of the sensing device are preferably placed in perpendicular to a direction of flow.

In preferred embodiments, an accuracy optimisation of the measurement method is achieved by modelling the heat flux through the cross-section of the sensing device 1 and therefore temperature differences between the temperature of the outer surface of the sleeve 10 and the temperature of the optical fibre 11 are accurately modelled. The modelling can take place in different ways. In one variant, the heat transfer through the surface of the sensing device is considered. The heat transfer can be modelled by use of the Biot number (Bi).

To use the sensing device 1 for direct velocity measurements, it is placed in a conduit in such a way, that the sections of the sensing device 1 are across, i.e. perpendicular, to the fluid flow which is to be measured.

Therefore, a flow velocity can be directly measured at every section, i.e. at every measuring point, by applying the calibrated measurement equation obtained from the calibrated measurement equation mentioned above

In case the sensing part of the sensing device 1 is wound to a spiral, the fluid flow, of which the velocity is measured, is flowing in axial direction with regard to the spiral of the sensing device 1 and therefore, almost all sections are arranged across the flow, as shown in figure 1. This axial flow is marked in figure 3 with an arrow comprising the reference sign $F_A$.

The velocity of a radial flow through the spiral, marked in figure 3 with arrow $F_R$, can be measured by only considering the sections with the lowest temperatures. Sections, which are not located across the flow, are cooled less and have higher temperatures.

This means that axial and radial flows in conduits can be measured.

Not only the velocity, but also the direction of a flow can be measured by the inventive sensing device 1. For this, measurements of two or more sections 110 of the sensing device 1 are evaluated simultaneously. The sections of the sensing device 1, in which those measurement points are located, are orientated differently towards the mean flow direction.

Figure 3 shows first sections 111 and second sections 112 arranged at an angle to each other and therefore differently to each other. The sections 111, 112 are marked with dashed lines.

Preferably, the two or more measurement points are located in close proximity of each other. Ideal cylinders in cross flow are cooled more effectively than ideal cylinders in longitudinal flow. Therefore, a temperature difference between the two measurement points, each of them located in separate cylindrical sections 111, 112 of the sensing device 1, is detectable, resulting in different measured flow velocities. The spatial relations of the two or more sections 111, 112 of the sensing device 1 can then be used to quantify the mean flow direction and the mean flow velocity. This calculation is well known in the hot-wire anemometry and can be applied here as well.

Description of an inventive sensing unit

The measurement method mentioned above and the sensing device can be used in a sensing unit, which is capable to measure flow velocities in boreholes, pipelines, in groundwater or in other kind of underground cavities.

An exemplary embodiment of the sensing unit comprising the sensing device 1 is described in the following. For example, such a sensing unit can be used as a borehole probe and will be shown in the next section.

In a preferred embodiment, the sensing unit comprises a sensing device 1 with a radially shaped end as described above and a control unit 2. The control unit 2 transforms voltage-current ratios to achieve a controlled supply of electrical power. This is shown in figure 4.

The sensing device 1 is wound such that both free ends 100, 101 are arranged on the same side of the helix or the cylinder. The ends 100, 101 enter into a housing 20 of the control unit 2. Within the housing 20, a transformer 21 is arranged. The optical fibres 11, for example the DTS optical fibre cable, are freely lead through the housing 20. The electrical conductors 12, i.e. the heating wires, are preferably connected to the transformer 21.

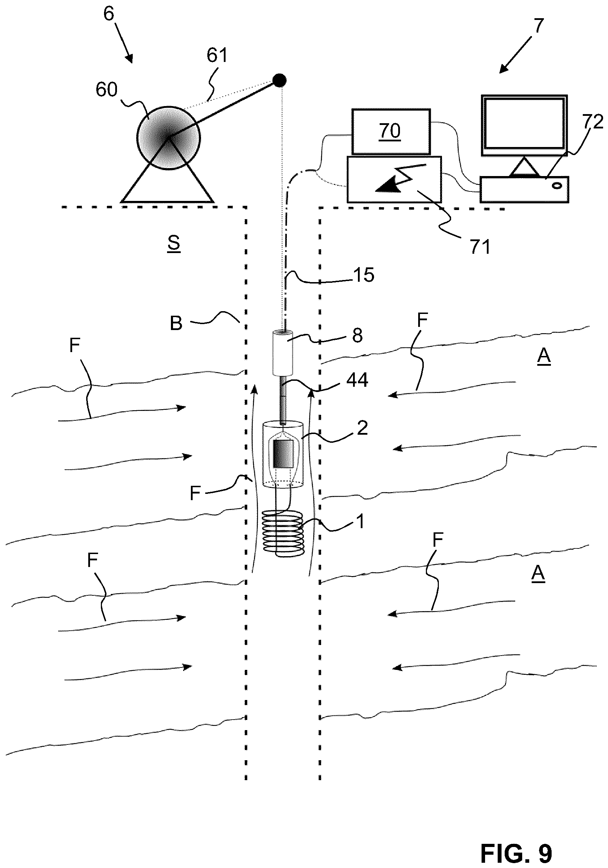

Leaving the housing 20, the optical fibres 11 and power lines 14 connected with the electrical conductors 12 are preferably combined one again in a common connection conduit 15, which leads to a control and measurement unit 7 shown in figures 9 to 11.

The connection conduit 15 is preferably part of the sensing device 1. It comprises the DTS optical fibre cable 11 and electrical conductors. The electrical conductors can be the heating wires 12 used in the helix or spiral. Alternatively, the electrical conductors are electrical wires 14 supplying power for heating the electrical conductors 12. Alternatively, the connection conduit 15 can also be attached to the sensing unit via additional connectors. Therefore different fibres can be used in the sensing device and the connection conduit, which are connected to each other.

At least the connection conduit 15 is preferably flexible, so that it can be wound on a spool.

This sensing unit can be used in different operational manners.

In a first measuring method, the fluid flows axially along the spirally wound sensing device 1. Hence, every section 100 of the sensing device 1 is approximately in cross flow as can be seen in figure 3. The flow velocity can be measured at every section 100 directly.

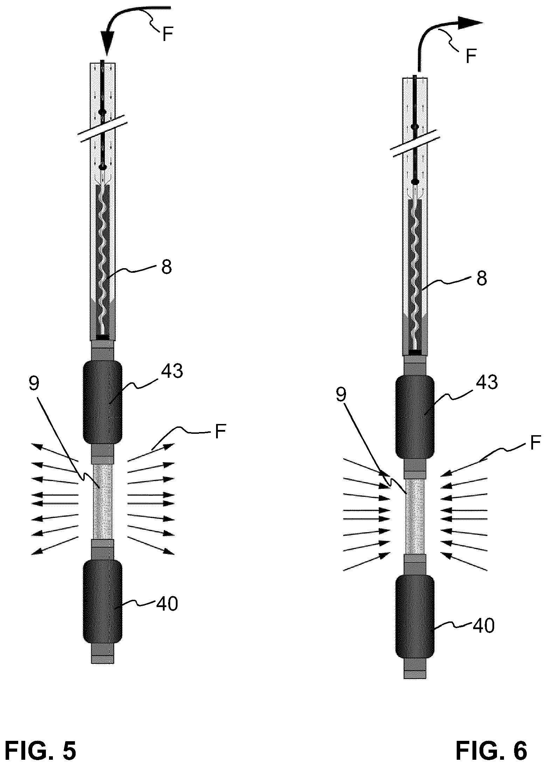

In a second measuring method, a filter 9 is installed in the centre of the spirally wound sensing device 1. A pump 8, installed above or below the sensing unit 1, forces a flow through the filter 9 so that a radial flow towards the centre or away from the centre of the spirally wound sensing device 1 is established. The filter 9 comprises openings in radial direction through which the fluid is either pressed out of the centre of the sensing unit or the fluid is sucked into the centre by the pump 8. An example of a pump system with the filter 9 is show in figures 5 and 6. When it is used together with the inventive sensing unit, the filter 9 is arranged within the helix of the sensing device 1. Every section 100 of the spirally wound sensing device 1 is then in cross flow which allows to measure a radial flow.

In a third measuring method, an aquifer flow that flows for example along a borehole cross section or along a groundwater cavity is measured. In this method, hotter and cooler sections 100 of the spirally wound measurement device 1 are differentiated by a control and measurement unit 7. Hotter sections are mainly in longitudinal flow and colder sections are mainly in cross flow, so that velocity and direction of the aquifer flow can be detected. The calculation is known from the hot-wire anemometry and can be applied here as well.

In order to apply the measurement equation of the measurement method, also fluid temperature $T_F$ has to be measured. Fluid temperature $T_F$ can either be measured by a separate temperature sensor or can be measured by the sensing device 1 itself before it is heated. In preferred embodiments, the fluid temperature $T_F$ is measured by the sensing device 1 itself.

Measurement of flows $F_A$ flowing along the axis of the spirally wound sensing device 1 benefit from measuring $T_F$ along that axis, because the fluid is heated along the sensing device 1 so that $T_F$ potentially increases along the sensing device 1. This means that a separate temperature sensor located in the axis of the spiral improves the measurement.

Temperature $T_F$ of radial flows $F_R$ towards the centre of the spirally wound sensing device 1 do not have to be measured with a separate temperature sensor, but can be measured by the sensing device 1 before heating it up. The same applies for Temperature $T_F$ of radial flows $F_R$ away from the centre of the spirally wound sensing device 1.

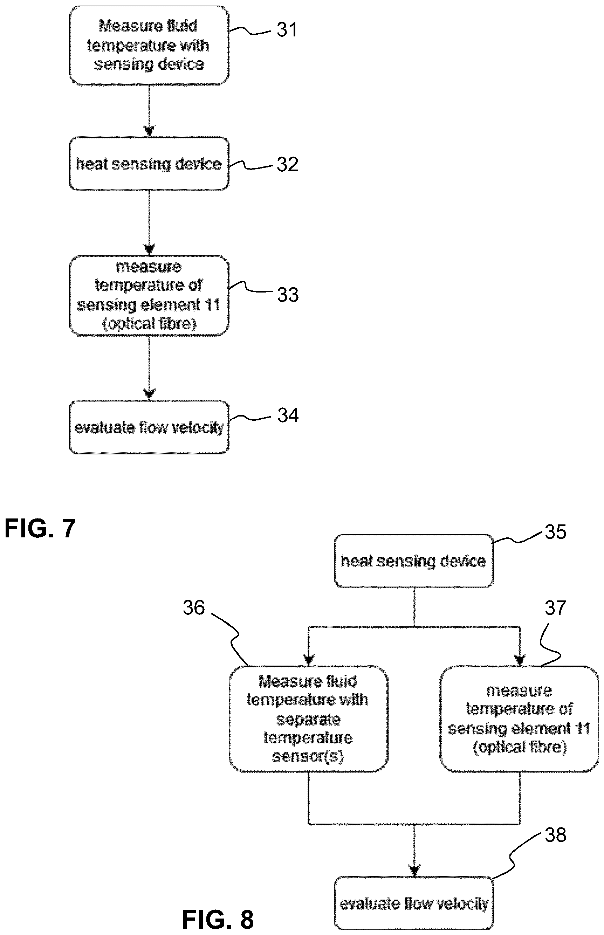

Figure 7 shows a measuring method where the fluid temperature is measured in a first step 31, preferably by the sensing device 1 itself. In a second step 31 following the first step 31, the sensing device is heated. It is preferably heated electrically. The temperature of the sensing device 1, actually of the optical fibres 11, are measured in a third step 33 and the flow velocity is evaluated by means of the control and measurement unit 7 in a fourth step 34.

Figure 8 shows a measuring method where the sensing device 1 is directly heated in a first step 35. It is preferably heated electrically. The fluid temperature is measured in a second step 36 by use of a separate temperature sensor and at the same time, the temperature of the optical fibres is measured in a third step 37. Then, the flow velocity is evaluated in a fourth step 38.

Further method steps are available to gain additional measurement parameters: In one variant, the inventive method comprises the step of analysing the heating behaviour of the sensing device 1 when a fluid flow is already active by measuring the time until the heat transfer between sensing device 1 and the fluid are in equilibrium.

In some variants, the inventive method comprises the additional or alternative step of analysing the cooling behaviour by first heating the sensing system and then activating a flow to measure the time until heat transfer between sensing system and fluid are in equilibrium.

Description of inventive sensing unit in use as a borehole probe

The measurement method and sensing unit can for example be used to measure flow velocities in boreholes. The use in pipelines, underground water or other underground cavities is similar. The description applies to such use as well.

For such applications, the sensing unit is part of a measurement system. This measurement system comprises in addition a surface gear such as a drop-down unit 6 comprising a winch 60 and a rope 61 to lower the sensing unit into the borehole. The measurement system further comprises the connection conduit 15 connecting the sensing unit with the control and measurement unit 7. The measurement unit 7 comprises an optical measurement device 70, such as a DTS measuring apparatus, connected to the temperature sensing fibres 11, such as a DTS cable.

The measurement unit 7 further comprises a power supply 71 connected to the power lines 14 and a control unit for controlling the whole system and for computing the measured values in order to obtain the flow velocity and other information evaluated by the sensing device 1.

The above mentioned measurement equation is applied when evaluating the flow velocity. The calibration takes preferably place at the manufacturer and the sensing unit can be used in different boreholes or different pipes.

The downhole gear consists of a straddle containing at least the sensing unit with the sensing device 1 and the control unit 2. The straddle may also comprise a pump 9, which is preferably fixedly connected to the housing 20 of the control unit 2 using a connection rod 44. The connection conduit 15 enclosing the temperature sensing fibres 11 and the power lines 14 extends through the borehole and connects the borehole probe with the fibre optic measurement device and the power supply. This is shown in figure 9.

In figure 9, the sensing unit and a pump 8 are lowered through a borehole B of the soil S into an aquifer A. The sensing unit is already in position for measuring. The flow F in the aquifer A is forced by the pump to the center axis of the spirally wound sensing device 1 and is forced in axial direction through the spiral to the top of the borehole. The velocity of the flow leaving the borehole can be measured.

The borehole B fills with water once it is drilled and the aquifer A has been hit because the fluid in the aquifer A is under high pressure. If the borehole B is pumped out, the water column is reduced so that water flows continuously from the aquifer A. The pump volume flow can be measured on the surface or adjusted directly on the pump 8. The borehole probe, i.e. the sensing unit, measures a volume velocity and therefore a volume flow that flows at a certain depth in the borehole. A volume flow measurement downstream of the pump 8 thus provides a total volume flow. The measurement with the probe provided a partial volume flow in the borehole, since additional water from less deep aquifers flow into the borehole.

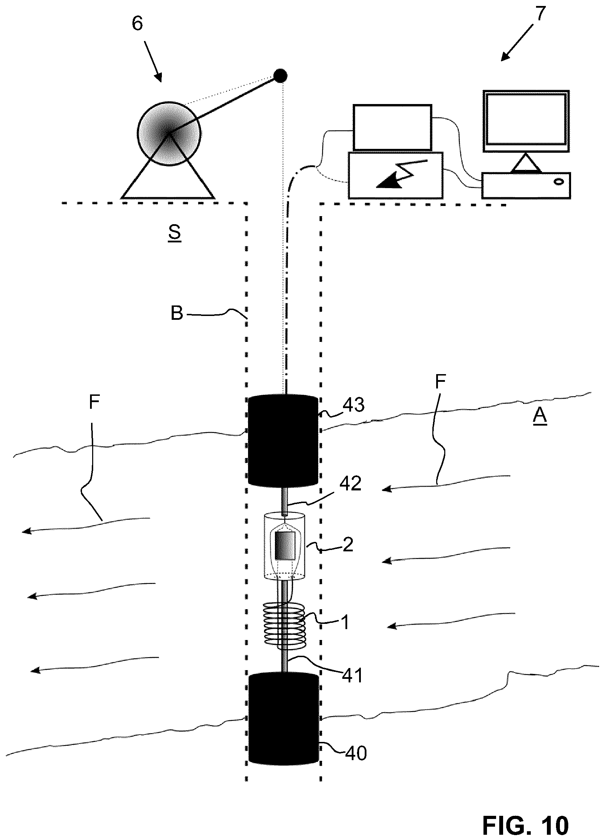

Figure 10 shows the sensing unit located in an aquifer A with the radial flow $F_R$ passing the sensing device 1. The sensing unit is arranged between a lower packer 40 and an upper packer 43 which isolate and close the borehole interval on the lower and the upper side of the flow. Preferably, the sensing unit is fixedly connected between these two packers 40, 43 by use of a lower stiff rod 41 and an upper stiff rod 42. The temperature sensing fibres 11 and the electrical conductors 12 are lead through the upper rod 42, the upper packer 43, the connection rod 44 to the connection conduit 15. Preferably, no pump 8 is present. The radial flow is measured by applying the measurement equation to all sections of the sensing device. Because sections 111 and 112 of the sensing device (see figure 3) are orientated differently to each other, temperature differences between those sections will be measured. The differences in temperature can be used to evaluate mean flow velocity and mean flow direction, similar to X-array and triaxial hot-wire anemometry, as described above.

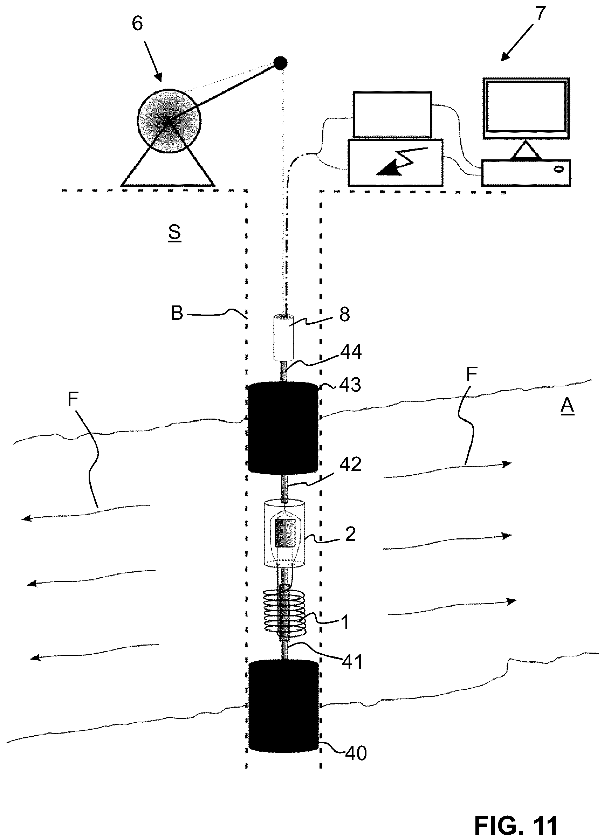

In Figure 11, the sensing unit is located in an aquifer A with a radial flow F flowing away from the centre of the sensing device. The sensing unit comprises the filter 9 arranged in the centre of the helix of the sensing device 1. Water or fluid flows radially away from the filter 9 in the centre of the sensing device in all directions. It is to be noted that the drawing does not show just two flow directions, but a lateral cross-section of the borehole B. The aquifer A is distributed three-dimensionally in all spatial directions and absorbs water orfluid accordingly over the entire mantle surface of the borehole B. This is similar to a sponge that absorbs water in all directions when water is injected inside it.

Measurements are carried out continuously or for predefined time periods or for arbitrary time periods, depending on the application. Specific examples of use are long term aquifer A monitoring at geothermal power supplies, in which cross-sectional borehole flows are measured, as well as short term fracking tests, in which water is injected into a borehole interval in order to characterise the aquifer's mechanical properties.

## LIST OF REFERENCE SIGNS

| | | | |
|---|---|---|---|
| 1 | sensing device | 41 | lower rod |
| 10 | sleeve | 42 | upper rod |
| 100 | first end | 43 | upper packer |
| 102 | second end | 44 | connection rod |
| 110 | section | | |
| 111 | first section | 6 | drop-down unit |
| 112 | second second | 60 | winch |
| 11 | temperature sensing fibre | 61 | rope |
| 12 | electrical conductor | | |
| 13 | thermal conductor | 7 | control and measurement |
| 14 | electrical wire | | unit |
| 15 | connection conduit | 70 | optical measurement device |
| | | 71 | power supply |
| 2 | control unit | 72 | control unit |
| 20 | housing | | |
| 21 | transformer | 8 | pump |
| 31 | first step | 9 | filter |
| 32 | second step | | |

(continued)

| | | | |
|---|---|---|---|
| 33 | third step | A | aquifer |
| 34 | fourth step | F | fluid flow |
| 35 | first step | $F_A$ | axial flow |
| 36 | second step | $F_R$ | radial flow |
| 37 | third step | S | soil |
| 38 | fourth step | B | borehole |
| 40 | lower packer | | |

**Claims**

1. A method for measuring a fluid flow using a heated sensing device arranged in the fluid flow, wherein the method comprises the steps of

   measuring a temperature of the fluid,
   heating the sensing device with a first sensor element of the sensing device, measuring a temperature of the sensing device with a second sensor element being different from the first sensor element, and calculating a fluid velocity using the difference between the measured temperature of the sensing device and the measured temperature of the fluid.

2. The method of claim 1, comprising the steps of heating the first sensor element by supplying an electrical power and calculating the fluid velocity using the equation

$$u = \sqrt[n]{\frac{\frac{P_{el}}{\lambda_F \pi \Delta l} \frac{1}{(T_S - T_F)} \left(\frac{T_F}{T_S - T_F}\right)^s - A}{B}}$$

   with fluid velocity $u$, sensing device temperature $T_S$, fluid temperature $T_F$, supplied electrical power $P_{el}$ at a section $\Delta l$ of the sensing device, the section $\Delta l$ having the temperature $T_S$ and with the calibrated values: parameters A and B, the constants $n$ and $s$ and fluid's thermal conductivity $\lambda_F$.

3. The method of claim 1, comprising the steps of heating the first sensor element by supplying a constant electrical power and wherein the fluid velocity is calculated using the equation

$$u = \sqrt[n]{k_1 \frac{1}{(T_S - T_F)} \left(\frac{T_F}{T_S - T_F}\right)^s - k_2}$$

   with fluid velocity $u$, constant $n$, constant $s$, sensing device temperature $T_S$, fluid temperature $T_F$ and two calibration constants $k_1$ and $k_2$.

4. The method of one of claims 1 to 3, wherein the temperature of the fluid is measured before the sensing device is heated.

5. The method of one of claims 1 to 3, wherein the temperature of the fluid is measured while or after the sensing device is heated.

6. The method of one of claims 1 to 5, wherein the temperature of the fluid is measured with the second sensor element.

7. The method of one of claims 1 to 6, comprising the steps of supplying a second sensor element with a multiple of measuring sections, measuring the sensing device temperatures in at least some of the multiple of measuring sections, calculating fluid velocity for each of the measured temperatures of the sensing device temperatures and combining the calculated fluid velocities to a fluid velocity field.

8. The method of one of claims 1 to 7, comprising the step of using a second sensor element based on temperature sensing fibre optics, especially a DTS optical fibre cable or a Fiber Bragg Grating cable.

9. A sensing device for measuring a fluid flow, especially for measuring with the method according to one of claims 1 to 8, wherein the sensing device is a cable with a sleeve, a heatable first sensor element and a temperature sensitive second sensor element, wherein the heatable first sensor element and a temperature sensitive second sensor element are arranged within the sleeve.

10. The sensing device according to claim 9, wherein at least the second sensor element extends along the whole length of the sleeve.

11. The sensing device according to one of claims 9 or 10, wherein at least a part of the length of the sensing device is wound to a helix, preferably a cylindrical helix with a round cross section.

12. The sensing device according to one of claims 9 to 11, wherein the second sensor element is based on temperature sensing fibre optics, especially it is a DTS optical fibre cable or a Fiber Bragg Grating cable.

13. The sensing device according to one of claims 9 to 12, wherein the first sensor element is at least one heating wire.

14. The sensing device according to one of claims 9 to 13, wherein the second sensor element is arranged centrally in the sleeve and extends along the central axis of the sleeve, the first sensor element is arranged around the second sensor element and a thermal conductor material fills a remaining space in the sleeve.

15. A borehole probe comprising a sensing device according to one of claims 9 to 14.

FIG. 1

FIG. 2

FIG. 3

FIG. 4

**FIG. 5**

**FIG. 6**

```
┌─────────────────┐
│  Measure fluid  │ ──── 31
│ temperature with│
│ sensing device  │
└─────────────────┘
         │
         ▼
┌─────────────────┐
│ heat sensing    │ ──── 32
│ device          │
└─────────────────┘
         │
         ▼
┌─────────────────┐
│    measure      │ ──── 33
│ temperature of  │
│ sensing element │
│ 11 (optical     │
│ fibre)          │
└─────────────────┘
         │
         ▼
┌─────────────────┐
│ evaluate flow   │ ──── 34
│ velocity        │
└─────────────────┘
```

**FIG. 7**

```
                    ┌─────────────────┐
                    │ heat sensing    │ ──── 35
                    │ device          │
                    └─────────────────┘
                             │
          36 ──┐       ┌─────┴──────┐     ┌── 37
               ▼       ▼            ▼
   ┌─────────────────┐      ┌─────────────────┐
   │  Measure fluid  │      │    measure      │
   │ temperature with│      │ temperature of  │
   │    separate     │      │ sensing element │
   │   temperature   │      │ 11 (optical     │
   │   sensor(s)     │      │ fibre)          │
   └─────────────────┘      └─────────────────┘
            │                        │
            └───────────┬────────────┘
                        │
                        ▼          ──── 38
               ┌─────────────────┐
               │ evaluate flow   │
               │ velocity        │
               └─────────────────┘
```

**FIG. 8**

14

**FIG. 9**

**FIG. 10**

6

7

S

B

8

44

43

F

F

A

42

2

1

41

40

**FIG. 11**

Europäisches
Patentamt

European
Patent Office

Office européen
des brevets

# EUROPEAN SEARCH REPORT

**Application Number**

EP 21 21 7527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 783 189 A1 (ZENITH OILFIELD TECHNOLOGY LTD [GB]) 1 October 2014 (2014-10-01) | 1-13,15 | INV. G01F1/688 G01F1/696 |
| A | * paragraph [0022] * * paragraphs [0040] - [0047]; figures 1a-1c * | 14 | |
| X | US 2014/294041 A1 (ZHANG YIBING [US] ET AL) 2 October 2014 (2014-10-02) * paragraphs [0035] - [0039]; figures 1A-C * * paragraphs [0058] - [0061] * * paragraph [0071] * * paragraph [0079] * | 1-10, 12-15 | |
| X | WO 2015/153549 A1 (SCHLUMBERGER CA LTD [CA]; SCHLUMBERGER SERVICES PETROL [FR] ET AL.) 8 October 2015 (2015-10-08) * paragraphs [0012] - [0018]; figure 2 * | 1-5, 7-10,12, 13,15 | |
| X | US 2006/214098 A1 (RAMOS ROGERIO [GB]) 28 September 2006 (2006-09-28) * paragraphs [0066] - [0075]; figure 1 * | 1-10, 12-15 | **TECHNICAL FIELDS SEARCHED (IPC)** G01F |

The present search report has been drawn up for all claims

| Place of search | Date of completion of the search | Examiner |
|---|---|---|
| The Hague | 30 May 2022 | Tomasoni, Flora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 7527

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2022

| Patent document cited in search report | | | Publication date | Patent family member(s) | | | Publication date |
|---|---|---|---|---|---|---|---|
| EP 2783189 | A1 | | 01-10-2014 | CA | 2855349 | A1 | 30-05-2013 |
| | | | | CN | 103930752 | A | 16-07-2014 |
| | | | | EP | 2783189 | A1 | 01-10-2014 |
| | | | | GB | 2496863 | A | 29-05-2013 |
| | | | | US | 2014290335 | A1 | 02-10-2014 |
| | | | | WO | 2013076479 | A1 | 30-05-2013 |
| US 2014294041 | A1 | | 02-10-2014 | US | 2014294041 | A1 | 02-10-2014 |
| | | | | WO | 2014160914 | A1 | 02-10-2014 |
| WO 2015153549 | A1 | | 08-10-2015 | NONE | | | |
| US 2006214098 | A1 | | 28-09-2006 | CA | 2521543 | A1 | 04-11-2004 |
| | | | | GB | 2401430 | A | 10-11-2004 |
| | | | | US | 2006214098 | A1 | 28-09-2006 |
| | | | | WO | 2004094961 | A1 | 04-11-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8423304 B2

- DE 102014119231 A1